# EUROPEAN PATENT APPLICATION

(11) **EP 1 473 622 A2**
(43) Date of publication of application: **03.11.2004**
(21) Application number: 04005525.3
(22) Date of filing: 09.03.2004
(51) Int. Cl.: G06F 3/033

(54) **Hand-held wireless computer cursor controlling device**

(30) Priority: 30.04.2003 US 425946
(71) Applicant: TOPSEED TECHNOLOGY CORP., Chung Ho City, Taipei Hsien, Taiwan 235 (TW)
(72) Inventor: Chen, Shoei-Lai, Sanshia Jen Taipei Taiwan 237 (TW)
(74) Representative: TER MEER STEINMEISTER & PARTNER GbR

(57) **Abstract**

A hand-held wireless computer curser controlling device including a housing, a controller, a vibration sensor and transmitter is disclosed. The controller is installed in the housing for receiving an input and outputting a respective signal. The vibration sensor is installed in the housing and electrically connected to the controller for detecting a two-dimension movement of a user's hand to generate a locating signal to be inputted to the controller. The transmitter is electrically connected to the controller, for demodulating the outputting signal from the controller and transmitting a demodulated signal to a computer to control the movement of a computer curser.

## Description

### BACKGROUND OF THE INVENTION

The present invention relates in general to a hand-held wireless computer cursor controlling device, which includes a vibration sensor, as an inputting device of the computer peripherals.

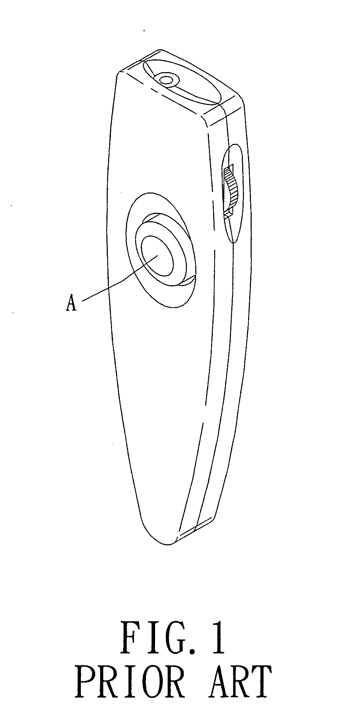

The computer is more and more popularly used for a briefing in the meeting. It can provide an active performance without the projecting sheets. However, whether the briefing can be smoothly proceeded depends on if the computer can be easily used. While the speaker operates the software of the computer by himself or herself, it may limit his or her performance. Alternatively, it may need someone else to accompany the speaker. Both of these are not good enough. Therefore, a conventional wireless computer cursor controlling device is provided for the speaker to hold on hand, such that the computer is controlled via infrared (IR) or radio frequency (RF) transmission. Please refer to FIG. 1, the traditional device includes multiple buttons. The ball A is provided for rolling in 360 degrees and pressing. There is a circular opening circuit beneath the ball A. While the ball is pressed to connect the circuit, a two-dimension locating signal is generated. However, the ball with diameter between 1 and 1.5 cm is not easy for precisely positioning. Therefore, the moving of the computer cursor can not be exactly controlled. Nevertheless, a gyrostatic ball is used to provide more excellent moving control, it is much bigger and heavier and make the device not compact any more. Thus, there still needs further improvement.

### BRIEF SUMMARY OF THE INVENTION

The present invention provides a hand-held wireless computer cursor controlling device including a vibration sensor. The vibration sensor is an accelerometer for detecting a two-dimension movement to generate a locating signal. Furthermore, the accelerometer is a semiconductor element with small size. The present invention utilizes the movement of the user's hand to exactly control the computer cursor without the ball or the gyrostat, and thus it can obtain a compact device with precise control.

### BRIEF DESCRIPTION OF THE DRAWINGS

These as well as other features of the present invention will become more apparent upon reference to the drawings wherein:
Figure 1 shows the perspective view of a prior art wireless computer-cursor controlling device; and
Figure 2 shows a circuit diagram of present invention.

### DETAILED DESCRIPTION OF THE INVENTION

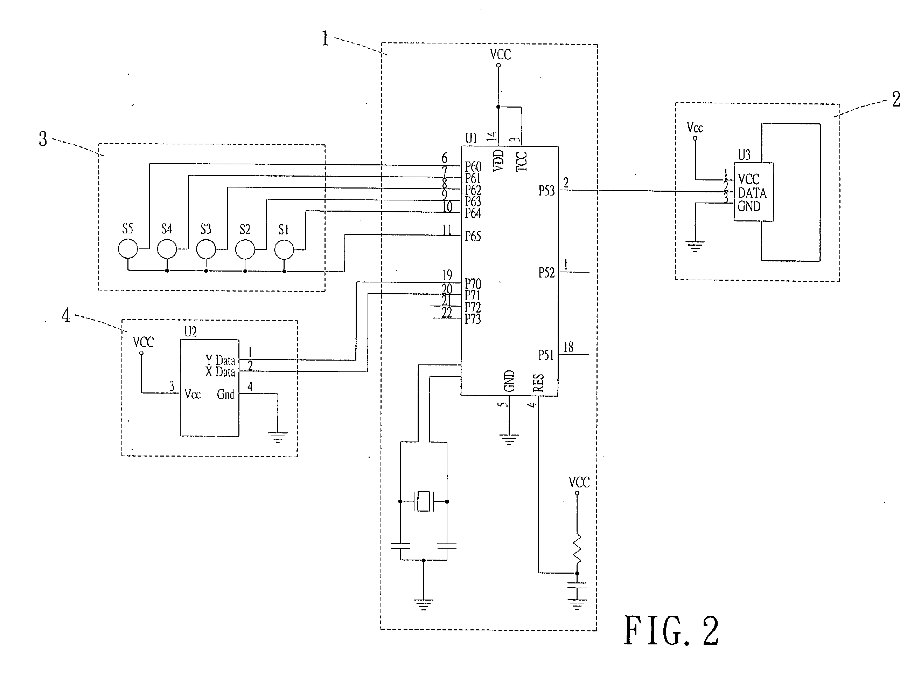

The wireless computer cursor controlling device of the present invention is a hand-held device with the operation similar as a remote controller and a wireless mouse. It includes a housing and a circuit board. Further, a plurality of function buttons are installed on the housing. Please refer to FIG. 2, a circuit diagram of the present invention is shown, including a controller 1, a transmitter 2, a set of buttons 3 and a vibration sensor 4. The controller 1 including a microprocessor U1 is connected with the transmitter 2, the buttons 3 and the vibration sensor 4. The buttons 3 includes one or more switches S1-S5 to provide a specific functional control such as page up/down and the left/right button of the mouse. One of the buttons 3 is an enabling button. While pressing the enabling button, it enables the operating control of the computer cursor. The controller 1 can receive an input as the buttons 3 are pressed and output a respective signal to the transmitter 2. The transmitter 2 then transmits the modulated signal as IR or RF signal to the computer. The vibration sensor 4 includes an accelerometer U2 or similar. The accelerometer U2 is a semiconductor element such as the MXD2125GL products manufactured by MEMSIC Company. The accelerometer U2 is used to detect a two-dimension movement. When there is a movement, a locating signal can be generated by calculating the acceleration and the direction of the movement. The locating signal is then sent to the controller 1 to be transferred as a serial signal for outputting to the transmitter 2. Similarly, the signal is modulated and transmitted as IR or RF signal to be received by a receiver of the computer (not shown). After the demodulation by the computer, the computer cursor is accordingly moved under the control of the present device. Therefore, it utilizes the movement of the user's hand to exactly control the computer cursor. That is, the moving direction of the user's hand decides and is exactly the moving direction of the computer cursor during the enabling button is pressed.

This disclosure provides exemplary embodiments of the present invention. The scope of the present invention is not limited by these exemplary embodiments. Numerous variations, whether explicitly provided for by the specification or implied by the specification, such as variations in structure, dimension, type of material and manufacturing process may be implemented by one of skill in the art in view of this disclosure.

## Claims

1. A hand-held wireless computer curser controlling device, comprising:
a housing;
a controller installed in the housing, for receiving an input and outputting a respective signal;
a vibration sensor installed in the housing and electrically connected to the controller, for detecting a two-dimension movement of a user's hand to generate a locating signal to be inputted to the controller; and
a transmitter installed in the housing and electrically connected to the controller, for demodulating the outputting signal from the controller arid transmitting a demodulated signal to a computer to control the movement of a computer curser.

2. The hand-held wireless computer curser controlling device of claim 1, wherein the vibration sensor is a two-dimension accelerometer.

3. The hand-held wireless computer curser controlling device of claim 1, further comprising an enabling button connected to the controller, wherein the locating signal is generated during the enabling button is pressed.

4. The hand-held wireless computer curser controlling device of claim 1, wherein the demodulated signal is an infrared (IR) signal.

5. The hand-held wireless computer curser controlling device of claim 1, wherein the demodulated signal is a radio frequency (RF) signal.
